# EUROPEAN PATENT APPLICATION

(11) **EP 2 876 595 A1**
(43) Date of publication of application: **27.05.2015**
(21) Application number: 13820135.5
(22) Date of filing: 22.04.2013
(51) Int. Cl.: G06Q 30/02, G06Q 30/06, G06T 1/00, G07G 1/00, H04B 13/00

(54) **ELECTRONIC APPARATUS AND METHOD**

(30) Priority: 19.07.2012 JP 2012160998
(71) Applicant: Nikon Corporation, Tokyo 100-8331 (JP)
(72) Inventor: SATO, Takuya, Tokyo 100-8331 (JP); ITO, Daiki, Tokyo 100-8331 (JP); EJIMA, Satoshi, Tokyo 100-8331 (JP); NAKAHATA, Minako, Tokyo 100-8331 (JP); MUSHU, Hiroyuki, Tokyo 100-8331 (JP); SUGAWARA, Tomoko, Tokyo 100-8331 (JP); SEKIGUCHI, Masakazu, Tokyo 100-8331 (JP)
(74) Representative: Skone James, Robert Edmund
(86) International application number: PCT/JP2013/002712
(87) International publication number: WO 2014/013649

(57) **Abstract**

To acquire information on products which a user has handled and at which a line of sight of the user has been stopped, associating with products that the user has purchased and the user's attributes. The present invention includes a first input unit to which information indicating that a user has reached for a first product is input; an estimating unit that estimates the attributes of the user; and a storage unit that stores the information indicating that the user has reached for the first product in association with the attributes of the user when the user has not purchased the first product, wherein when the user has purchased a second product in the same category as the first product, the storage unit stores information on the second product.

## Description

### BACKGROUND

### 1.TECHNICAL FIELD

The present invention relates to an electronic apparatus and a method.

### 2.RELATED ART

Patent Document 1 discloses a sales promotion system used for sales management and promotion, that acquires information on a product handled by a shopper, by using human-body communication.

### CITATION LIST

### Patent Literature

Patent Document 1: Japanese Patent Application Publication No. 2010-277256A

### SUMMARY

The sales promotion system of Patent Document 1 is capable of acquiring information on products handled by shoppers, but it is not capable of analyzing detailed sales trends, trends in shoppers' interests, or the like.

An aspect of the present invention is to provide an electronic apparatus that includes a first input unit to which information indicating that the user has reached for a first product is input; an estimating unit that estimates the attributes of the user; and a storage unit that, when the user has not purchased the first product, stores information indicating that the user has reached for the first product in association with the attributes of the user. Another aspect of the present invention is to provide a method executed by such an electronic apparatus.

The above summary of the invention does not list all necessary characteristics of the present invention. Sub-combinations of this group of characteristics also belong to the invention.

### BRIEF DESCRIPTION OF THE DRAWINGS

FIG. 1 is a block diagram of a configuration of an information processing system 1 according to an embodiment of the invention.
FIG. 2 is a drawing schematically illustrating the information processing system 1.
FIGS. 3A and 3B are tables showing information recorded in relation to a user's purchasing process; FIG. 3A is a table showing information prior to purchasing a product, and FIG. 3B is a table showing the result of the user's purchasing actions.
FIGS. 4A to 4C are diagrams illustrating the timing of the human-body communication for product B and product C of category label G3 in FIG. 3A.
FIG. 5 illustrates an example of arrangement information illustrating the arrangement of products.
FIG. 6 is a flowchart illustrating an example of a process performed by an information processing unit 73 of a server 70.
FIG. 7 is a flowchart illustrating an example of a process performed by the information processing unit 73 of the server 70.

### DESCRIPTION OF EXEMPLARY EMBODIMENTS

The following is an explanation of the present invention based on embodiments of the invention, but the following embodiments are not intended to limit the scope of the invention, which is defined by the claims. The features described with respect to the embodiments are not necessarily essential to the invention.

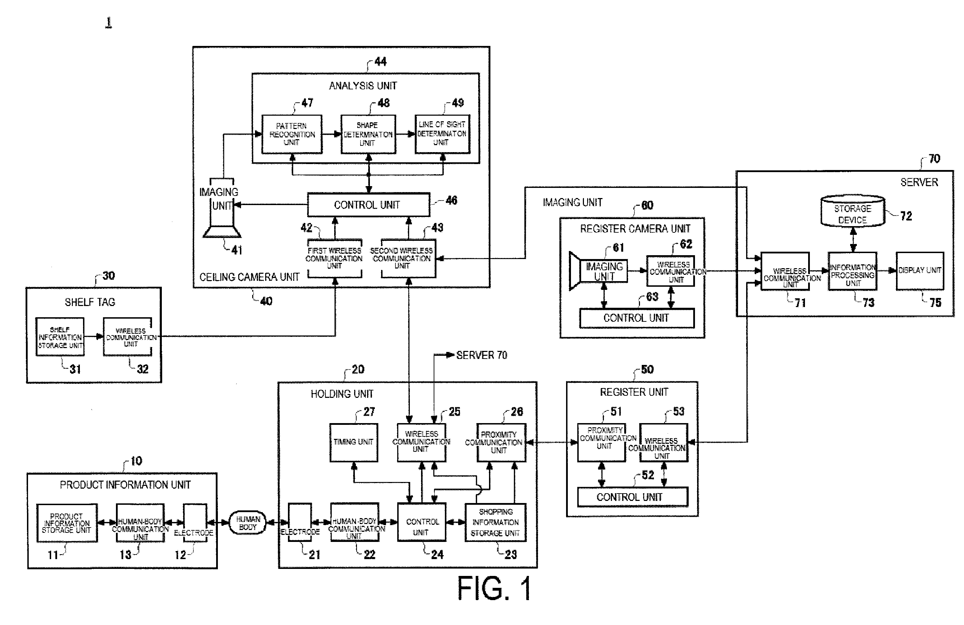

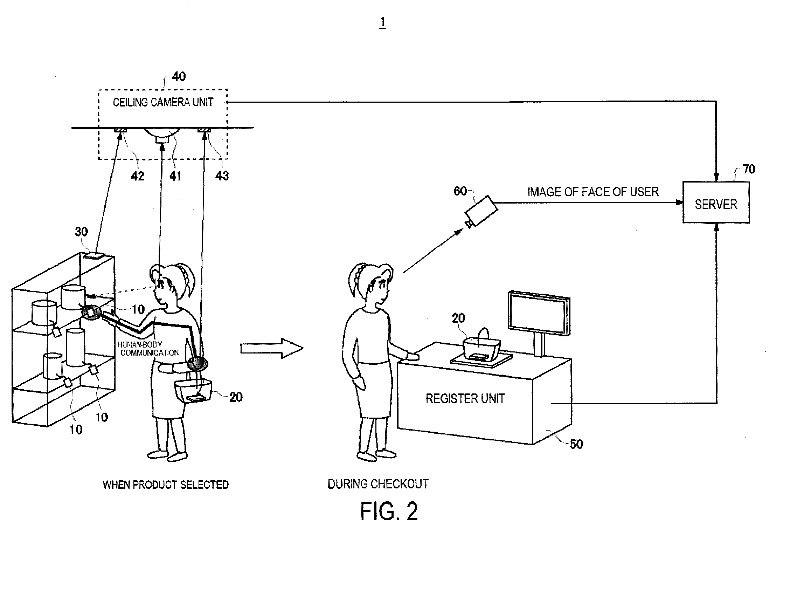

FIG. 1 illustrates a configuration of an information processing system 1 according to an embodiment of the invention, and FIG. 2 illustrates an example of use of the information processing system 1.

The information processing system 1 is used in stores selling products or the like. The information processing system 1 collects information on products in which a user (e.g. a shopper) has shown interest (e.g. a product handled by a shopper or a product looked at by a shopper).

### (Configuration of the Information Processing System 1)

As illustrated in FIGS. 1 and 2, the information processing system 1 includes a product information unit 10 that is attached to the surface or packaging or the like of a product, a holding unit 20 such as a basket or cart or the like carried by a user, a shelf tag 30 provided to a product display shelf, a ceiling camera unit 40 provided to the ceiling or the like of the store, a register unit 50 provided to a register for checking out the products, a register camera unit 60 that takes images of users checking out, and a server 70 connected to the ceiling camera unit 40, the register unit 50, and the register camera unit 60.

### (Product Information Unit 10)

The product information unit 10 is provided or added to each product, or provided in a position on a product display shelf where a user can touch it when the user reaches for the product, and product information is transmitted by human-body communication in response to the user handling the product with the user's hand. The product information unit 10 includes a product information storage unit 11, an electrode 12, and a human-body communication unit 13. In FIG. 2, a product tag is shown associated with each product as an example.

The product information storage unit 11 may be non-volatile memory that stores the product information for identifying the product. The product information is information that includes a category label representing the product category and a product label to identify the product within the category. All the products within the store may be defined by the combination of category label and product label.

The electrode 12 includes a signal electrode and a ground electrode, and transmits and receives signals to and from the holding unit 20 via the user by human-body communication. The electrode 12 is provided in a position that is easily touched by the hand when the user handles a product.

The human-body communication unit 13 is connected to the product information storage unit 11 and the electrode 12 and includes a transmission unit comprising an electrical circuit that includes a band-pass filter. The transmission unit modulates data to be transmitted and generates transmission signals. The human-body communication unit 13 may also have a function for receiving data. The human-body communication unit 13 transmits the product information stored in the product information storage unit 11 to the holding unit 20 via the body of the user.

Methods of the human-body communication include electric current methods in which a weak electric current is passed through the body and the current is modulated to transmit the information, and electric field methods in which an electric field that is induced on the surface of the body is modulated to transmit the information. In the present embodiment, either an electric current method or an electric field method can be used. If an electric field method is adopted, the human-body communication unit 13 can be used if the user has a bare hand (in other words, if the electrode 12 is touched by the hand of the user) as well as if the user has a glove (in other words, when the user's hand faces the electrode 12), and, it is possible to detect if the hand is close even if the user does not touch the electrode 12.

### (Holding Unit 20)

The holding unit 20 may be a basket or the like for carrying products while the user is shopping, and is designed to collect, by the human-body communication, the product information of the products for which the user reached. The holding unit 20 includes an electrode 21, a human-body communication unit 22, a shopping information storage unit 23, a control unit 24, a wireless communication unit 25, and a proximity communication unit 26.

The electrode 21 includes a signal electrode and a ground electrode, and transmits and receives signals to and from the product information unit 10 via the user by the human-body communication. The electrode 21 is positioned so that when the user is carrying the basket the electrode 21 contacts the hand, arm, or the like or is close to the body of the user.

The human-body communication unit 22 is connected to the electrode 21, and includes a receiving unit comprising an electrical circuit that includes a band-pass filter. The receiving unit demodulates received signals to generate received data. The human-body communication unit 22 may also have a function for transmitting data. When the user reaches for the product information unit 10 (in other words, when the user's hand approaches the product information unit 10 to within the distance to enable the human-body communication), the human-body communication unit 22 receives the product information from the product information unit 10 via the body of the user. The method of the human-body communication of the human-body communication unit 22 is the same as the method of the human-body communication used by the product information unit 10.

The shopping information storage unit 23 may be non-volatile memory or volatile memory, and stores purchasing process information to distinguish products for which the user has reached and products purchased by the user, and identification information to identify the basket.

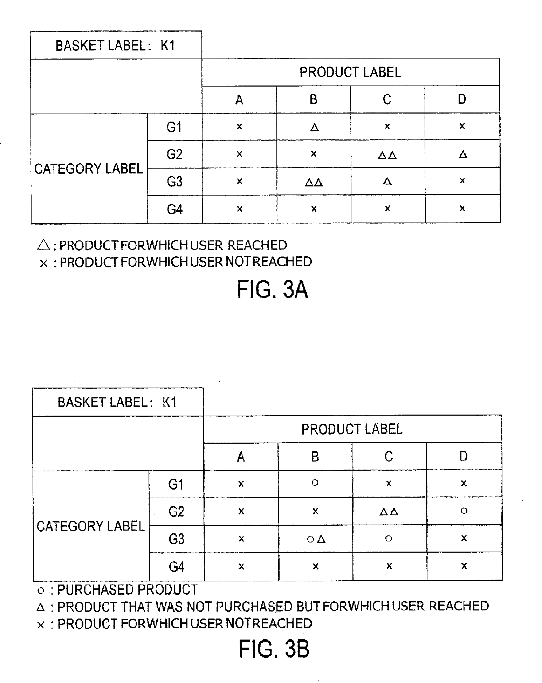

FIGS. 3A and 3B are tables showing information recorded in relation to the user's purchasing process; FIG. 3A is a table showing information prior to purchasing a product, and FIG. 3B is a table showing the result of the user's purchasing actions. FIG. 3B shows data that is not stored in the shopping information storage unit 23 but in the storage device of the server 70, which is described in detail later. As shown in FIG. 3A, the purchasing process information may be represented as a table having product categories (category labels G1, G2, G3,...) in the vertical direction (rows) and specific products (product labels A, B, C,...) within these product categories in the horizontal direction (columns). Information indicating that the user has not reached for a product (×), that the user has reached for a product (Δ), and that the user has purchased a product (○) is stored in the table. The number of Δ or ○ symbols indicates the number of times the product has been handled by the user or the number of times the product has been purchased by the user, respectively.

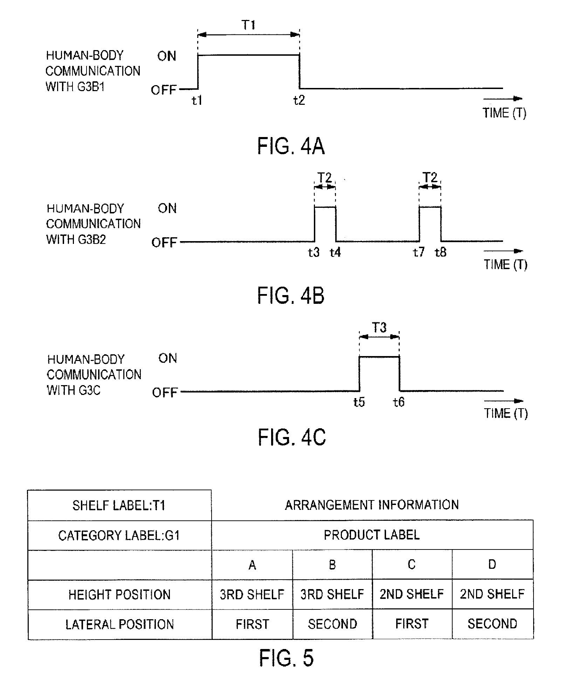

FIGS. 4A to 4C illustrate the timing of the human-body communication for product B and product C of category label G3 in FIG. 3A, and the following is a continuation of the description of the purchasing process for product B and product C of category label G3 using FIG. 3A and FIGS. 4A to 4C.

As shown in FIG. 3A, the user has handled two products B of category label G3 (hereinafter, referred to as product G3B1 and product G3B2), and handled one product C of category label G3 (hereinafter, referred to as product G3C).

As illustrated in FIG. 4A, at time t1, the user handled product G3B1, and at time t2, put it down. Therefore, the human-body communication was established during the time period T1. Based only on the result of the human-body communication by the human-body communication units 13, 22, it is unclear whether or not the user has placed product G3B1 in the holding unit 20, but by using an imaging result of the ceiling camera unit 40, a result of the checkout at the register unit 50, or the like, the action of the user can be identified.

Also, as illustrated in FIG. 4B, at a certain time t3, the user handled product G3B2 and at time t4, put it down. In this case, product G3B1 and product G3B2 are the same product and the user has already finished handling product G3B1, so the human-body communication time period T2 is shorter than the human-body communication time period T1. According to the results of these human-body communications, it can be inferred that after handling product G3B1, the user was interested in it, and handled product G3B2. Also, according to FIGS. 4A and 4B, it can be identified that the user did not handle product G3B1 and product G3B2 at the same time, but handled them consecutively with a small interval of time therebetween.

Next, as illustrated in FIG. 4C, at a certain time t5, the user handled product G3C and at time t6, put it down. The time period T3 during which product G3C was handled (human-body communication time) was shorter than the human-body communication time period T1, and longer than the human-body communication time period T2. This is because it was a different product in the same category.

Thereafter, as illustrated in FIG. 4B, at time t7, the user again handled product G3B2 and at time t8, put it down. For ease of description, it is assumed that the human-body communication time period is the same as the time period during which the product G3B2 was handled the previous time. Because the product G3C was handled, this user's action indicates either that the product G3B2 was returned from the holding unit 20 to the product display shelf or that its position within the holding unit 20 was moved.

In this way, it is possible to detect the actions of the user based on the communication time period of the human-body communication units 13, 22, the number of communication periods, or the like. In order to determine the user's actions, in the present embodiment, FIGS. 3A and 3B are compared (described in detail later) to determine that the user purchased product G3B1, did not purchase product G3B2 (returned it to the product display shelf), and purchased one product G3C. Also, it is possible to determine that the user initially handled product G3B1 (indicated interest), and then handled product G3C.

Returning to FIG. 1, the control unit 24 includes a central processing unit (CPU), which is connected to the human-body communication unit 22, the shopping information storage unit 23, the wireless communication unit 25, and the proximity communication unit 26 to control the whole holding unit 20. As shown in FIGS. 3A and 3B and as described above, the control unit 24 receives the product information from the product information unit 10 via the human-body communication, and enters the information (Δ) indicating that the user reached for the product into the cell that is identified by the product information (category label and product label) in the purchasing process information.

The wireless communication unit 25 is connected to the shopping information storage unit 23, and communicates with the ceiling camera unit 40 and the server 70 by wireless communication such as a wireless local area network (LAN), Bluetooth (registered trademark), or infrared communication, or the like. When the user stands still, the wireless communication unit 25 transmits the identification information stored in the shopping information storage unit 23 to the ceiling camera unit 40, and receives instructions from the server 70, and the like.

The proximity communication unit 26 communicates with the register unit 50 via non-contact communication such as FeliCa (registered trademark) or the like, proximity wireless transfer technology such as TransferJet (registered trademark) or the like, or proximity communication such as near field communication (NFC) or the like to transmit the purchasing process information to the register unit 50. Alternatively, the proximity communication unit 26 may communicate with the register unit 50 by a cable communication method in which electrical contact is made between electrodes. During checkout, the proximity communication unit 26 transmits the identification information and the purchasing process information stored in the shopping information storage unit 23 to the register unit 50. The time when the proximity communication unit 26 communicates with the register unit 50 may be the time when communication becomes possible, the time when the user approaches the register unit 50 according to the ceiling camera unit 40, or the like (in other words, when it is inferred that the shopping is complete). If the ceiling camera unit 40 recognizes that the user is approaching the register unit 50, the proximity communication unit 26 may be omitted, and communication with the register unit 50 may be carried out using the wireless communication unit 25, or the identification information, the purchasing process information, and the like may be transmitted to the server 70.

Atiming unit 27 times various periods including the shopping time period (staying time) from when the user arrives at the store and takes a holding unit 20 until the user approaches the register unit 50, the time period the user stays in front of a product the user is interested in, the time period during which the user handles a product, and the like. The timing results are stored in the shopping information storage unit 23.

### (Shelf Tag 30)

As illustrated in FIG. 2, the shelf tag 30 is provided to a product display shelf, and transmits information to identify the product display shelf, information on the products arranged on the product display shelf, or the like (hereinafter, referred to as the shelf label) to the ceiling camera unit 40. The shelf tag 30 includes a shelf information storage unit 31 and a wireless communication unit 32.

The shelf information storage unit 31 may be a non-volatile memory that stores the shelf label. The wireless communication unit 32 is connected to the shelf information storage unit 31, and communicates with the ceiling camera unit 40 via wireless communication. The wireless communication unit 32 transmits the shelf label stored in the shelf information storage unit 31 to the ceiling camera unit 40.

### (Ceiling Camera Unit 40)

A plurality of ceiling camera units 40 are provided to the ceiling, walls or the like of the store and are connected to the server 70 via a network. The ceiling camera unit 40 includes an imaging unit 41, a first wireless communication unit 42, a second wireless communication unit 43, an analysis unit 44, and a control unit 46. Each of the units constituting the ceiling camera unit 40 does not necessarily have to be provided integrally, but may be provided separately.

The imaging unit 41 includes a group of lenses and an imaging element such as a charge coupled device (CCD) image sensor or a complementary metal oxide semiconductor (CMOS) sensor or the like, that takes images of subjects and outputs video or still images. The imaging unit 41 takes images of the sales area and the users from the ceiling.

The first wireless communication unit 42 is a circuit for communicating with the shelf tag 30 by wireless communication. The first wireless communication unit 42 communicates with the shelf tag 30 at the time of installation and receives the shelf label, in order to identify a product display shelf that is installed within the range that can be imaged by the imaging unit 41. If the product display shelf can be identified from the imaging result of the imaging unit 41, the first wireless communication unit 42 may be omitted.

The second wireless communication unit 43 is a circuit that communicates with the holding unit 20 and the server 70 by wireless communication. The second wireless communication unit 43 communicates with the holding unit 20 held by the user when the user enters the range that can be imaged by the imaging unit 41 in order to identify the user within the range that can be imaged by the imaging unit 41, and receives the identification information. Also, the analysis results of the analysis unit 44 that is described later are transmitted to the holding unit 20, the server 70 or the like. In this case, the holding unit 20 may store the analysis results in the shopping information storage unit 23, and may add a portion thereof (for example, line of sight information) to the table of FIG. 3A.

The first wireless communication unit 42 and the second wireless communication unit 43 may be a single transmission unit.

The analysis unit 44 comprises an application specific integrated circuit (ASIC) or the like, that performs analysis based on the imaging data output from the imaging unit 41, the speed of movement of the user (calculated from the differences between a plurality of image data), whether a product held by a user is placed in the holding unit 20 or is returned to the product display shelf, and information that represents the position in the direction of the line of sight of the user (position of the product display shelf or position on the shelf). The analysis unit 44 includes a pattern recognition unit 47, a shape determination unit 48, and a line of sight determination unit 49. The pattern recognition unit 47 is connected to the imaging unit 41, analyzes the images taken by the imaging unit 41, and recognizes patterns such as the outline of a head, the outline of a body, and the outline of a hand of the user, and the like, that appear in the images taken.

The shape determination unit 48 is connected to the pattern recognition unit 47, and analyzes the changes in the size of the patterns (for example, changes in the size of the head or the width of the shoulders) and the movements of the patterns based on the patterns detected by the pattern recognition unit 47. The shape determination unit 48 determines changes in the posture of the user (for example, movements such as standing, squatting, or the like, the orientation of the body, the direction of the face, the vertical angle of the face, the height of the face, and the like) based on the results of analyzing the size of the patterns and the movements of the patterns. Detection of changes in the posture of the user is disclosed in Japanese Unexamined Patent Application Publication No. 2011-141730A, which has already been filed by the applicants of this application.

The line of sight determination unit 49 is connected to the shape determination unit 48, and estimates the position to which the line of sight of the user is directed, based on the changes in the posture of the user determined by the shape determination unit 48. Also, if the line of sight of the user stays at one position for more than a predetermined period of time, the line of sight determination unit 49 generates line of sight information indicating the position where the line of sight stays. The line of sight information includes information that includes the shelf label (information received from the first wireless communication unit 42) representing the product display shelf in the direction of the line of sight of the user and information indicating what position within the product display shelf the line of sight is directed to (height position and lateral position on the product display shelf).

The control unit 46 includes a CPU, and is connected to the imaging unit 41, the first wireless communication unit 42, the second wireless communication unit 43, and the analysis unit 44 to control the whole ceiling camera unit 40. Specifically, the control unit 46 controls the imaging unit 41 to take images of the user that is shopping, and controls the analysis by the analysis unit 44.

### (Register Unit 50)

The register unit 50 is provided to a register where the user checks out products, and is connected to the server 70 via a network. The register unit 50 acquires the purchasing process information and the like from the holding unit 20 during checkout, and transmits it to the server 70. The register unit 50 includes a proximity communication unit 51, a control unit 52, and a wireless communication unit 53.

The proximity communication unit 51 is a circuit that communicates with the holding unit 20 before checkout or during checkout, and communicates using the same communication method as the proximity communication unit 26 of the holding unit 20. The proximity communication unit 51 receives the identification information and the purchasing process information from the holding unit 20.

The control unit 52 includes a CPU, and is connected to the proximity communication unit 51 and the wireless communication unit 53 to control the whole register unit 50. Specifically, the control unit 52 obtains the product information (category label and product label) for the products purchased by the user, from a memory that is not shown in the drawings. Also, as illustrated in FIGS. 3A and 3B, the control unit 52 enters information (○) indicating that the user has made a purchase in the cell identified by the product information (category label and product label) of the products purchased. In this way, information indicating that the user did not reach for a product (×), information indicating that the user reached for a product (Δ), and information indicating that the user purchased (○) a product is entered into each cell of the table representing purchasing process information.

The wireless communication unit 53 communicates with the server 70 via a network. The wireless communication unit 53 transmits the purchasing process information after information regarding the products purchased has been reflected by the control unit 52, as well as the identification information, to the server 70. The wireless communication unit 53 may also communicate via cable. If it is possible to provide the server 70 close to the register unit 50, the register unit 50 may be omitted, and the processing by the register unit 50 may be carried out by the server 70.

### (Register Camera Unit 60)

The register camera unit 60 takes images of the user that are used to detect the attributes of the user. The register camera unit 60 is provided in a position to enable it to take images of the face, half of the body of the user, or the like during checkout, and is connected to the server 70 via a network. The register camera unit 60 includes an imaging unit 61, a wireless communication unit 62, and a control unit 63.

The imaging unit 61 includes a group of lenses, and an imaging element such as a CCD image sensor or a CMOS sensor or the like, and takes images of the subjects and outputs video or still images. The imaging unit 61 takes images of the face of the user during checkout.

The wireless communication unit 62 communicates with the server 70 via a network. The wireless communication unit 62 transmits image data of the face of the users taken by the imaging unit 61 to the server 70.

The control unit 63 includes a CPU, and is connected to the imaging unit 61 and the wireless communication unit 62 to control the whole register camera unit 60. For example, the control unit 63 adjusts the imaging position and magnification of the imaging unit 61 so that the face of the user is appropriately included within the range that can be imaged, and controls the time for taking the image so that the image of the face of the user is taken at an appropriate time.

### (Server 70)

The server 70 is a computer device connected to the ceiling camera unit 40, the register unit 50, and the register camera unit 60 via a network, and in the present embodiment, controls the whole information processing system 1. The server 70 includes a wireless communication unit 71, a storage device 72, an information processing unit 73, and a display unit 75.

The wireless communication unit 71 communicates with the ceiling camera unit 40, the register unit 50, and the register camera unit 60 via a network. The wireless communication unit 71 receives the line of sight information from the ceiling camera unit 40, receives the purchasing process information and the identification information from the register unit 50, and receives user's face image data from the register camera unit 60. A portion of the wireless communication unit 71 may also communicate via cable.

The storage device 72 is a non-volatile large capacity storage device such as a hard disk or the like. The storage device 72 stores various types of information processed by the information processing unit 73, programs used for the operation of the server 70, data, and the like.

For example, the storage device 72 may store arrangement information indicating in what position on the product display shelf each product is arranged. As illustrated in FIG. 5, the arrangement information is information that includes, for each product display shelf, category labels (G1, G2, G3,...) indicating the categories of the products arranged on the product display shelf, and the position (height position and lateral position) within the product display shelf of each product (product labels A, B, C, D,...) arranged on a product display shelf.

The information processing unit 73 includes a CPU, an input/output interface, and the like, and is connected to the wireless communication unit 71, the storage device 72, and the display unit 75 to control the whole information processing system 1 in addition to the server 70. For example, the information processing unit 73 may control each unit via a network, search the arrangement information illustrated in FIG. 5 in response to receiving the line of sight information received by the wireless communication unit 71 from the ceiling camera unit 40, to detect the product information (identification information and product label) for the product arranged at the position indicated by the line of sight information.

Also, the information processing unit 73 may analyze the user's face images received by the wireless communication unit 71 from the register camera unit 60 during checkout, to find the user's attributes (for example, sex and age). For example, the method disclosed in Japanese Patent No. 4273359B (US Patent Application Publication No. 2010/0217743) can be used to determine the sex or to determine the age using images.

### (Processing by the Information Processing System 1)

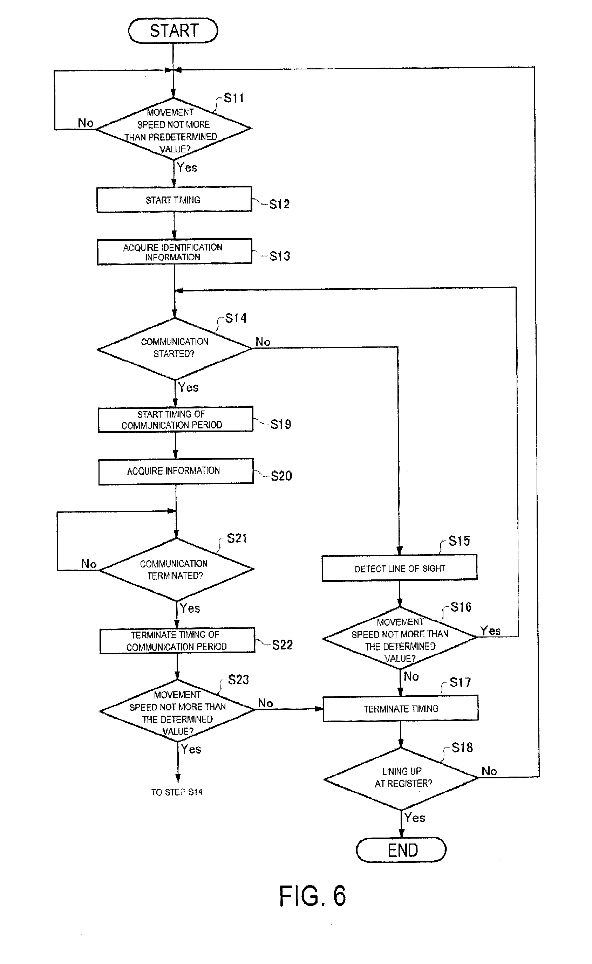

Next, the processing by the information processing system 1 according to the present embodiment is described in accordance with flowcharts. FIG. 6 is a flowchart illustrating an example of the process by the information processing unit 73 of the server 70. In the present embodiment, the process starts when the user takes the holding unit 20 and an image of the user is taken by the ceiling camera unit 40. Measurement of the staying time period of the user by the timing unit 27 starts from the time when the user takes the holding unit 20.

In step S11, the information processing unit 73 determines whether or not the movement speed of the user is not more than a predetermined value based on the analysis by the analysis unit 44. Specifically, the information processing unit 73 determines whether the movement speed is almost zero or is not more than 1 km/h in order to detect that the user has stopped. The information processing unit 73 repeats step S11 until the user stops.

When the user has substantially stopped, in step S12, the information processing unit 73 starts to measure the staying time period at the first sales location where the user has stopped, using the timing unit 27 of the holding unit 20.

In step S13, the information processing unit 73 controls the holding unit 20 to transmit the identification information to the ceiling camera unit 40 corresponding to the position where the user has stopped.

In step S14, the information processing unit 73 detects whether or not the human-body communication has started (has been established) between the product information unit 10 and the holding unit 20. Assuming the user has not reached for the product, the answer is No and the procedure proceeds to step S15.

In step S15, the information processing unit 73 estimates the line of sight of the user using the line of sight determination unit 49, and estimates the product category label and the product label based on the position of the shelf at which the user was gazing while handling no products.

In step S16, the information processing unit 73 determines, using the analysis unit 44, whether or not the speed of movement continues to be not more than the predetermined value. Here, it is assumed that the user has started to move and the speed of movement exceeds the predetermined speed, so the procedure proceeds to step S 17.

In step S 17, the information processing unit 73 terminates measurement of the time period during which the user was at the first sales location, and stores the time period at the first sales location in the shopping information storage unit 23.

In step S18, the information processing unit 73 determines whether or not the user is lining up at the register. If the user is not lining up at the register, the procedure returns to step S11 and it is assumed that the user is standing at a second sales location (step S11 to step S 13 are repeated).

In step S 14, the information processing unit 73 detects whether or not the human-body communication has started (has been established) between the product information unit 10 and the holding unit 20. This time, let's assume that at time t1 in FIG. 4A the human-body communication becomes established with the product G3B1, and the procedure proceeds to step S19.

In step S19, the information processing unit 73 measures the time period of the human-body communication from the time t1 when the human-body communication was established, using the timing unit 27.

Also, in step S20 which may be in parallel with step S19, the information processing unit 73 acquires information regarding the product that the user has handled, from the product information storage unit 11. In the present embodiment, it is assumed that the information obtained from the product information storage unit 11 is stored in the shopping information storage unit 23.

In step S21, the information processing unit 73 detects whether or not the human-body communication with the product G3B1 has terminated. Assuming that the human-body communication has terminated at time t2 as in Fig. 4A, the procedure proceeds to step S22. The information processing unit 73 repeats step S21 while the human-body communication is established.

In step S22, the information processing unit 73 terminates timing of the human-body communication time period by the timing unit 27, and stores the measured human-body communication time period T1 in the shopping information storage unit 23 in association with the information obtained from the product information storage unit 11.

In step S23, the information processing unit 73 determines whether or not the user's movement speed is not more than the predetermined value, and detects whether the user is stopped at a second sales location or moving. In the example of FIGS. 4B and 4C, the user is stopped at the second sales location, so the information processing unit 73 repeats step S 14 to step S23 until the human-body communication times T2 and T3 with the product G3B2 and the product G3C are obtained.

When it is determined that the user is moving from the second sales location in step S23, in step S 17 the information processing unit 73 terminates the timing and stores the time period during which the user was at the second sales location in the shopping information storage unit 23.

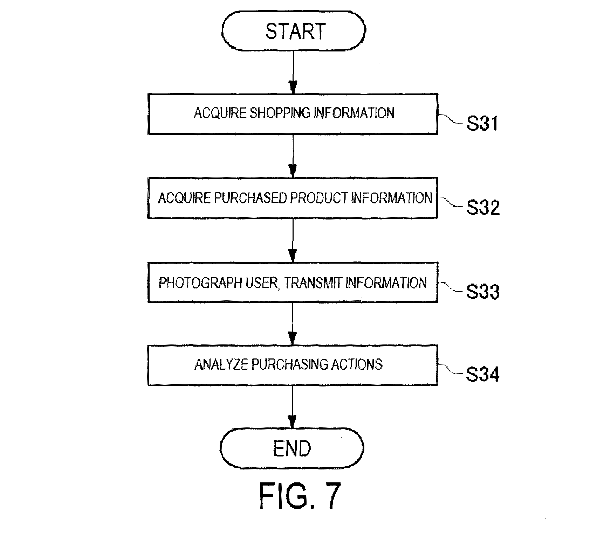

If the user is lining up at the register, the determination at step S18 is Yes, so the information processing unit 73 terminates the flowchart of FIG. 6 and starts the flowchart of FIG. 7. Note that the flowcharts of FIGS. 6 and 7 are separated only to simplify the flowcharts. For example, in the flowchart of FIG. 6, the information stored in the shopping information storage unit 23 may be transmitted to the register unit 50 at the time when the user lines up at the register.

The following is a continuation of the description of the process by the information processing unit 73 in accordance with the flow chart of FIG. 7.

In step S31, the information processing unit 73 stores, in a memory of the register unit 50 that is not shown in the drawings, the purchasing process information and the identification information stored in the shopping information storage unit 23 by means of the proximity communication units 26, 51. The information processing unit 73 may store the purchasing process information and the identification information in the storage device 72 of the server 70 using the wireless communication units 25, 71.

In step S32, the information processing unit 73 stores the purchased product information, which is information regarding the products purchased by the user, in a memory of the register unit 50 that is not shown in the drawings, using the control unit 52 of the register unit 50.

In step S33, the information processing unit 73 takes an image of the user using the imaging unit 61 of the register camera unit 60, and at the time when this image data is transmitted to the server 70 via the wireless communication units 62, 71, various types of information stored in a memory that is not shown in the drawings are transmitted to the server 70 using the wireless communication units 53, 71. In this way, the server 70 can store the image data of the user and the various types of information transmitted from the register unit 50 in the storage device 72 in association with each other.

In step S34, the information processing unit 73 analyzes the user's purchasing actions. Specifically, the user's attributes are detected based on the user's image data, and the purchasing action results (the table of FIG. 3B) are prepared by comparing the purchasing process information and the purchased product information. After detecting the user's attributes, the information processing unit 73 can protect the user's privacy by deleting the image data stored in the storage device 72.

Referring to FIGS. 3A, 3B, and 4A to 4C, the analysis of the purchasing actions of the user by the information processing unit 73 is illustrated. In FIG. 3B, the number of Δ represents the number of times the user handled the product, and the number of ○ represents the number of products that were handled and purchased. The information for the product for which the user did not reach may be omitted from the tables in FIGS. 3A and 3B.

Regarding the product G3B1, it can be seen that the user spent a comparatively long time handling (considering) it, placed it in the holding unit 20 and purchased it. Next, it can be seen that in a short interval of time, the user handled the same product G3B1 consecutively and although it was placed once in the holding unit 20, after the product G3B2 was handled and placed in the holding unit 20, the product G3B2 was returned to the shelf and was not purchased. In this way, it can be seen that this user did not purchase two of the same products in the same category, but purchased two different products in the same category. Also, when the user has handled a plurality of the same product, the information processing unit 73 can detect whether the user handled them at nearly the same time, or handled them consecutively, or handled them discontinuously after once handling another product. Further, by using the user's staying time, the staying time period at the second sales location, the time period handling products, and the like, it is also possible to know whether or not the user had decided in advance which products to purchase. Also, in cases where the time period from when the user stops at the second sales location until the user reaches for a product was long, it is possible to detect whether the user had difficulty finding that product, so the embodiments described above can be used to decide whether or not it is necessary to change the layout of the product display shelves. Also, in cases in which the user handled a plurality of different products in the same category, it is possible to detect that the user came to the store without having decided in advance which products to purchase. For products that were not purchased, it is possible to collect information such as whether users reached for them, whether the user looked at them, or whether the user ignored them, and the like, and this information can be given as feedback to each manufacturer (which products of other company are competing with one's own company's products, whether they are being purchased or whether they are not being purchased), and further, it can be used as data for marketing that includes information on each store, each locality, each user's attributes and the like.

As described above, with the information processing system 1 of the present embodiment, it is possible to store information regarding products handled by users and information regarding products that users have looked at, associating them with the product that was ultimately purchased and the attributes of the user. In this way, with the information processing system 1 of the present embodiment, it is possible to analyze detailed sales trends, trends in the interests of users, and the like.

For example, the information processing system 1 can be applied to a store in which a product such as clothing is purchased after a trial fitting. In this case, in the information processing system 1, when comparing a product that was purchased with a product that was handled (a trial fitting was carried out) but was not purchased, if the sizes of them were different but the designs and colors of them were the same, it is possible to analyze that the reason why the user handled but did not purchase the product was, for example, the size was different. Also, in the information processing system 1, when comparing a product that was trial fitted and not purchased with a product that was purchased, if the designs or the colors of them were different, it is possible to analyze that the reason why the user did not purchase the product was a problem with a design or a color preference.

Also, the information processing system 1 can be applied to a store that sells food. In this case, in the information processing system 1, when comparing a product that was purchased with a product that was handled but was not purchased, if the quantities of them were different but the products were the same, it is possible to analyze that the reason why the user handled but did not purchase the product was that the quantity was different. Also, in the information processing system 1, when comparing a product that was handled and not purchased with a product that was purchased, if the sizes and qualities of them were the same but the manufacturers of them were different, it is possible to analyze that the reason why the user did not purchase the product was a problem with preference for manufacturer.

In some cases, a plurality of users will be within the range that can be imaged by the imaging unit 41 of the ceiling camera unit 40. In this case, the control unit 46 of the ceiling camera unit 40 associates the identification information of each of the plurality of users with each of the users photographed by the imaging unit 41. For example, the control unit 46 causes the imaging unit 41 to photograph an enlarged image of the basket, and detect the identification information by reading information displayed on the basket from the image, and associates the user in the image taken with the identification information.

The shelf tag 30 may transmit the shelf label to the ceiling camera unit 40 as a two-dimensional code such as a bar code or the like, and not by wireless communication. In this case, the ceiling camera unit 40 photographs, by means of the imaging unit 41, the two-dimensional code provided to the product display shelf to identify the arrangement of the product display shelves.

The above was a description of embodiments of the present invention, not a definition of the scope of the present invention. The present invention should not be construed as limited to the scope of the embodiments described above. It will be clear to a person with ordinary skill in the art to which the present invention pertains that various modifications or improvements can be made to the embodiments described above. These modified or improved forms may be included within the technical scope of the present invention, as is clear from the scope of the claims.

Note that the sequence of execution of processes, actions, procedures, steps or stages, in devices, systems, programs and methods, etc. recited in the claims, described in the specification, or depicted in the drawings can be executed in any order, unless explicitly indicated by "before," "prior to," or the like, or if the output of a previous process is used in a subsequent process. Regarding the claims, the specification, and the action flow described in the drawings, for convenience, "first," "next," and so on have been used in some places, but this does not necessarily mean that this sequence of execution is essential.

### Reference Signs List

- 1: Information processing system
- 10: Product information unit
- 11: Product information storage unit
- 12: Electrode
- 13: Human-body communication unit
- 20: Holding unit
- 21: Electrode
- 22: Human-body communication unit
- 23: Shopping information storage unit
- 24: Control unit
- 25: Wireless communication unit
- 26: Proximity communication unit
- 27: Timing unit
- 30: Shelf tag
- 31: Shelf information storage unit
- 32: Wireless communication unit
- 40: Ceiling camera unit
- 41: Imaging unit
- 42: First wireless communication unit
- 43: Second wireless communication unit
- 44: Analysis unit
- 46: Control unit
- 47: Pattern recognition unit
- 48: Shape determination unit
- 49: Line of sight determination unit
- 50: Register unit
- 51: Proximity communication unit
- 52: Control unit
- 53: Wireless communication unit
- 60: Register camera unit
- 61: Imaging unit
- 62: Wireless communication unit
- 63: Control unit
- 70: Server
- 71: Wireless communication unit
- 72: Storage device
- 73: Information processing unit
- 75: Display unit

## Claims

1. An electronic apparatus, comprising:
a first input unit to which information indicating that a user has reached for a first product is input;
an estimating unit that estimates attributes of the user; and
a storage unit that stores the information indicating that the user has reached for the first product in association with the attributes of the user, when the user has not purchased the first product.

2. The electronic apparatus according to claim 1, wherein, when the user has purchased a second product in the same category as the first product, the storage unit stores information on the second product.

3. The electronic apparatus according to claim 2, wherein the storage unit stores information on a third product in the same category for which the user has not reached.

4. The electronic apparatus according to claim 2, wherein the first input unit inputs information indicating that the user has reached for the first product by human-body communication using at least an electrode provided to a shelf on which the first product is placed and an electrode provided to a holding unit to be taken by the user, which is capable of holding the first product.

5. The electronic apparatus according to claim 2, wherein the first input unit inputs information indicating that the user has handled the first product by human-body communication using an electrode provided to the first product and an electrode provided to a holding unit to be taken by the user, which is capable of holding the first product, and inputs a time period of the human-body communication.

6. The electronic apparatus according to claim 2, wherein the estimating unit estimates the attributes of the user based on imaging results by a first imaging unit that is capable of taking images of the user.

7. The electronic apparatus according to claim 6, wherein the estimating unit estimates the attributes of the user based on an image of the user taken by the first imaging unit during checkout.

8. The electronic apparatus according to claim 1, further comprising a second input unit that inputs information that is different from the information input by the first input unit, based on imaging results by a second imaging unit that is capable of taking images of the user from above.

9. The electronic apparatus according to claim 8, wherein the second input unit inputs information regarding a line of sight of the user based on imaging results by the second imaging unit.

10. The electronic apparatus according to claim 8, wherein the second input unit inputs changes in the posture of the user based on imaging results by the second imaging unit.

11. An electronic apparatus, comprising:
an input unit to which a human-body communication time period and a number of times of human-body communications between a user and a first product is input; and
a detection unit that detects purchasing actions or non-purchasing actions of the user for the first product, based on the input results by the input unit.

12. The electronic apparatus according to claim 11, wherein the detection unit detects whether or not the user has handled almost simultaneously a plurality of the first products.

13. The electronic apparatus according to claim 11, wherein the detection unit detects whether or not the user has consecutively handled a plurality of the first products.

14. The electronic apparatus according to claim 11, wherein the input unit inputs the time over which the human-body communication has been established between the user and the first product, and
the detection unit detects the purchasing actions or the non-purchasing actions of the user for the first product based on the time over which the human-body communication has been established.

15. The electronic apparatus according to claim 14, wherein the detection unit detects whether or not the user has decided in advance to purchase the first product.

16. The electronic apparatus according to claim 11, wherein the detection unit detects whether or not a reason for not purchasing by the user is related to a quantity of the first product.

17. The electronic apparatus according to claim 11, wherein the detection unit detects whether or not a reason for not purchasing by the user is related to a size of the first product.

18. The electronic apparatus according to claim 1, further comprising a timing unit that, when a movement speed of the user is slower than a predetermined movement speed, measures a time period during which the user's movement speed is slow.

19. A method, comprising:
receiving information indicating that a user has reached for a first product;
estimating attributes of the user; and
storing the information indicating that the user has reached for the first product in association with the attributes of the user, when the user has not purchased the first product.

20. A method, comprising:
receiving a human-body communication time period and a number of times of human-body communications between a user and a first product; and
detecting purchasing actions or non-purchasing actions of the user for the first product, based on the input results.
